# EUROPÄISCHE PATENTSCHRIFT

(11) **EP 1 332 261 B1**
(45) Veröffentlichungstag und Bekanntmachung des Hinweises auf die Patenterteilung: **31.12.2008**
(21) Anmeldenummer: 01993731.7
(22) Anmeldetag: 31.10.2001
(51) Int. Cl.: E04C 2/54

(54) **LICHTELEMENT**
LIGHT ELEMENT
ELEMENT LUMINEUX

(30) Priorität: 09.11.2000 DE 20019047 U; 07.03.2001 DE 10110937
(43) Veröffentlichungstag der Anmeldung: 06.08.2003
(73) Patentinhaber: Deutsche Everlite GmbH, 97877 Wertheim (DE)
(72) Erfinder: SCHMIDT-TUDL, Arnold, 97877 Wertheim (DE)
(74) Vertreter: Schulz, Rütger
(86) Internationale Anmeldenummer: PCT/EP2001/012643
(87) Internationale Veröffentlichungsnummer: WO 2002/038883

(56) Entgegenhaltungen:
- EP-A- 0 279 634

## Beschreibung

Die Erfindung betrifft ein Lichtelement mit zwei transparenten Kunststoffplatten, zwischen die ein gewebeartiges Material und insbesondere ein Vlies gelegt ist.

Lichtelemente aus transparentem Kunststoffmaterial werden in großem Umfang in den Dächern von Werkhallen und Fabrikgebäuden für die Belichtung benötigt. Sie sind üblicherweise als extrudierte Doppelstegplatten ausgebildet. Sie müssen nach DIN 5034 blendfrei sein und daher wird in der Regel ein opalisierter Kunststoff eingesetzt, der aber nicht ausreichend blendfrei ist, ohne erheblichen Lichtverlust.

Nach DIN 4102, Teil 7, dürfen bei solchen Oberlichtkonstruktionen ebenso wie bei einem "normalen" Dach Flugfeuer und brennende Teile innerhalb der Normforderungen von oben nicht nach unten durchbrennen. Aus diesem Grunde werden die Lichtelemente bereits als Sandwichelemente aus zwei Doppelstegplatten gefertigt, zwischen die ein durchscheinendes Vlies gelegt ist. Dieses Vlies hat die Eigenschaft, dann, wenn das Lichtelement von oben durch Feuer erwärmt wird, den aufschmelzenden Kunststoff zu halten und insbesondere zu verhindern, dass unter der Wirkung des Feuers das Lichtelement einbricht und sich das Feuer nach unten ausbreitet. Das Vlies liegt normalerweise flächig an der oberen und der unteren Kunststoffplatte an und wird insbesondere an den Rändern, an denen die beiden Kunststoffplatten in einem Rahmen eingefasst sind, angeklemmt.

Auf Grund von Witterungseinflüssen und insbesondere wechselnder Sonneneinstrahlung ist ein solches Lichtelement Längenänderungen unterworfen. Da die Kunststoffplatten einen anderen Ausdehnungskoeffizienten als das zwischen ihnen befindliche Vliesmaterial haben, kommt es dann, wenn das Vlies an den Rahmen angeklemmt ist und ein solches Lichtelement sich infolge von Wärme ausdehnt, zu großen Spannungen im Vlies, die zum Zerreißen des Vlieses führen können. Dies tritt insbesondere dann auf, wenn das Lichtelement gewölbt ist, weil bei gewölbten Elementen die unterschiedliche Wärmeausdehnung der oberen und der unteren Platte dazu führt, dass diese sich infolge der entstehenden Spannungen berühren und dann erst recht einen Zug auf das Vlies ausüben. Zerreißt das Vlies, werden nicht mehr alle oben genannten Anforderungen erfüllt, insbesondere wird die Optik der Lichtelemente empfindlich gestört.

Aufgabe der Erfindung ist dementsprechend, ein solches Lichtelement so auszubilden, dass das zwischen die beiden transparenten Kunststoffplatten gelegte gewebeartige Material bei Längenänderung des Lichtelementes, die durch Temperaturschwankungen verursacht werden, nicht zerreißen kann.

Diese Aufgabe wird gemäß der Erfindung dadurch gelöst, dass zwischen den beiden Kunststoffplatten entlang deren Rändern Abstandshalter gelegt sind, und das gewebeartige Material in der von diesen Abstandshaltern umspannten Fläche eingelegt wird, sowie das Lichtelement nicht im Bereich des gewebeartigen Materials durchschraubt ist. Es hat dann einen geringen Abstand von beispielsweise 0,5 bis 2 mm von den gegenüberliegenden Rändern dieser Abstandshalter und kann sich in dem so zwischen der oberen und der unteren Platte gebildeten Hohlraum frei bewegen. Dehnen sich die Kunststoffplatten des Lichtelementes infolge von Wärmeeinstrahlung aus, wird das gewerbeartige Material davon nicht beeinflusst, es wird weder an seinen Rändern noch an einer anderen Stelle von den Kunststoffplatten geklemmt, sodass keine Zugspannungen im gewebeartigen Material entstehen.

Im Folgenden wird die Erfindung anhand der in den Figuren dargestellten Ausführungsbeispiele beschrieben und näher erläutert.
Fig. 1 zeigt einen Querschnitt durch ein erstes Ausführungsbeispiel der Erfindung;
Fig. 2 veranschaulicht die Anordnung der Abstandshalter und eines Vlieses;
Fig. 3 zeigt einen Querschnitt durch ein zweites Ausführungsbeispiel der Erfindung;
Fig. 4 zeigt eine der Fig. 2 entsprechende Darstellung für das zweite Ausführungsbeispiel;
Fig. 5 zeigt einen den Fig. 1 und 2 entsprechenden Querschnitt für ein drittes Ausführungsbeispiel und
Fig. 6 zeigt eine den Fig. 2 und 4 entsprechende Darstellung des dritten Ausführungsbeispiels.
Fig. 7 bis 9 zeigen weitere Ausführungsbeispiele.

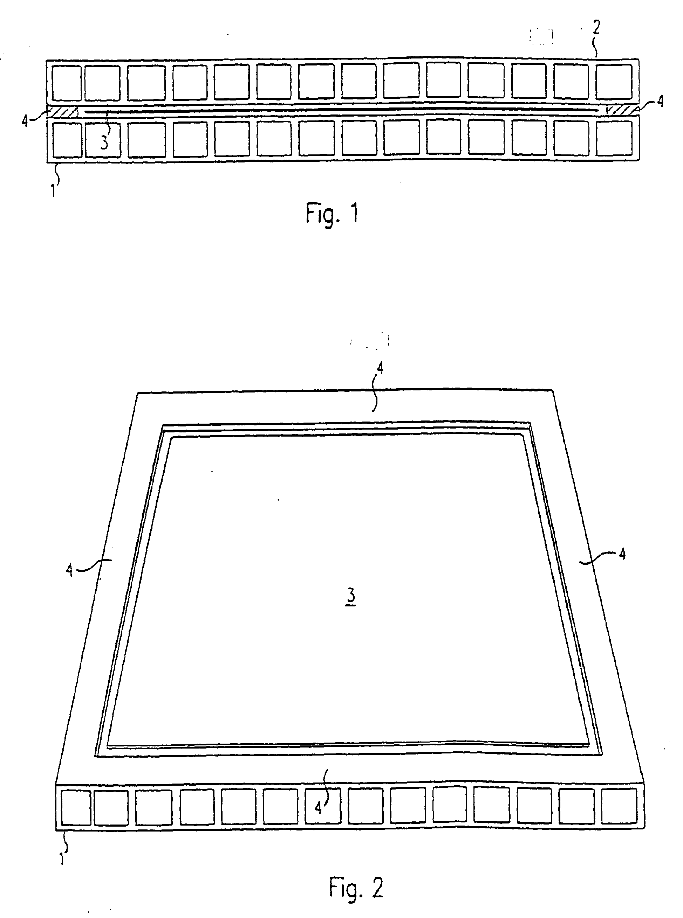

Gemäß Fig. 1 besteht ein erfindungsgemäßes Lichtelement aus einer als Doppelstegplatte ausgebildeten Grundplatte 1 und einer im Abstand davon angeordneten zweiten Doppelstegplatte 2, zwischen denen entlang deren Rändern Abstandshalter 4 angeordnet sind. Diese Abstandshalter 4 definieren einen abgeschlossenen Zwischenraum, in dem das Vlies 3 eingelegt ist. Da das Vlies weder an seinen Rändern noch in der Mitte von den beiden Doppelstegplatten geklemmt wird, kann es sich frei bewegen. Dehnen sich die Doppelstegplatten 1, 2 aus, hat dieses keinen Einfluss auf das Vlies.

Fig. 2 zeigt schematisch eine perspektivische Ansicht auf ein Lichtelement, bei dem die obere Deckplatte 2 abgenommen ist. Es ist erkennbar, dass entlang den Rändern die Abstandshalter 4 verlaufen, das Vlies ist in die von den Abstandshaltern 4 umspannte Fläche eingelegt und besitzt einen kleinen Abstand dazu, der beispielsweise zwischen 0,5 und 2 mm liegt.

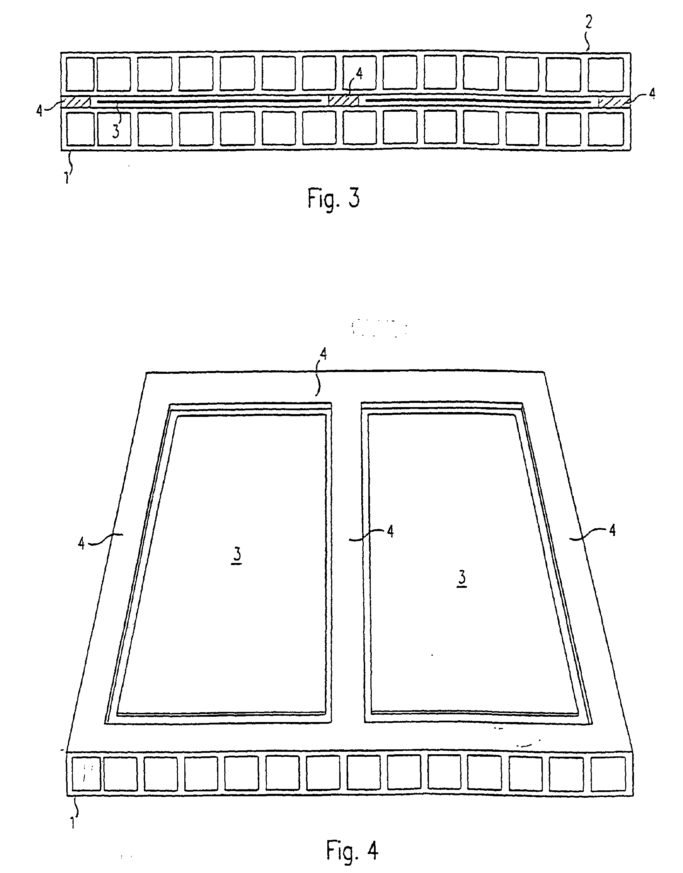

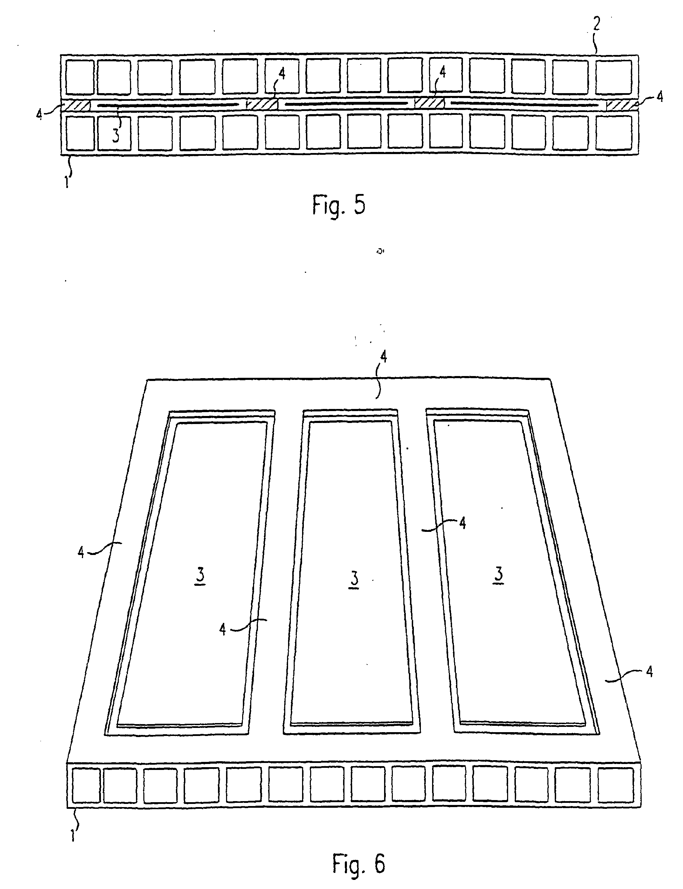

In Fig. 3 und Fig. 5 sind Querschnitte durch weitere Ausführungsbeispiele dargestellt, die sich für sehr großflächige Lichtelemente eignen. Sie entsprechen im wesentlichen der Ausführungsform nach Fig. 1, jedoch sind die Abstandshalter 4 nicht nur an den Rändern der Doppelstegplatten 1, 2 angeordnet, sondern verlaufen auch entlang deren Mitten. Damit wird der Neigung entgegengewirkt, so dass sehr großflächige Platten sich durchbiegen und die Doppelstegplatten 1, 2 sich aufgrund einer solchen Durchbiegung miteinander berühren könnten.

Fig. 4 und Fig. 6 zeigen in einer perspektivischen Darstellung den Verlauf der Abstandshalter 4 und die Lage der Vliesstücke 3, wobei wiederum wie bei Fig. 2 die obere Doppelstegplatte 2 der besseren Übersichtlichkeit halber nicht dargestellt ist.

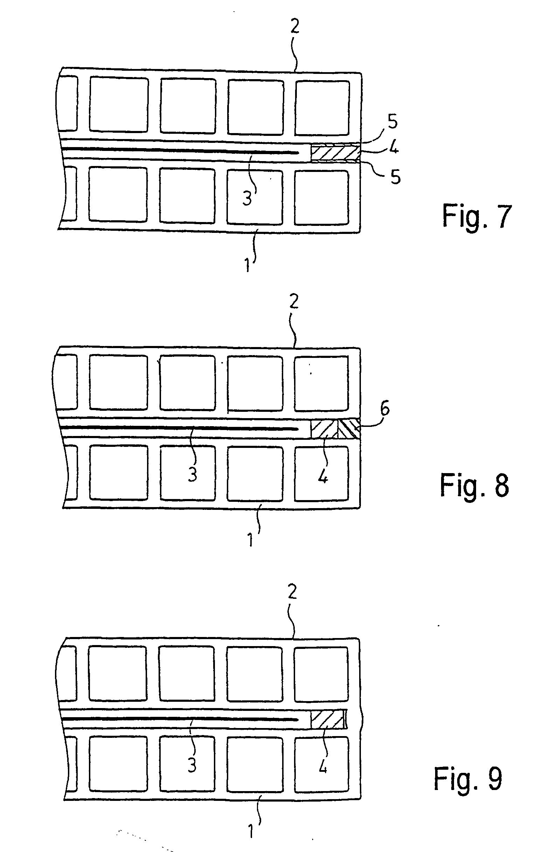

Vorzugsweise werden Bänder aus elastisch nachgiebigem Kunststoff als Abstandshalter verwendet. Diese Bänder können auf einer oder, wie in Figur 7 dargestellt ist, auch auf beiden Seiten mit einer Klebeschicht 5 versehen sein, mit der sie an den äußeren Rändern der Doppelstegplatten befestigt werden.

Wenn für die als Abstandshalter 4 dienenden Bänder ein geschäumter Kunststoff verwendet wird, so besteht die Gefahr, dass die Abstandshalter aufgrund von Witterungseinflüssen Wasser aufsaugen, das dann durch die Abstandshalter hindurch in den Raum zwischen den Kunststoffplatten 1, 2 gelangen kann, so dass diese innen mit Wassertröpfchen beschlagen. Um dies zu verhindern, wird am äußersten Rand zwischen den Platten 1, 2 eine Dichtmasse, insbesondere eine Butyl-Dichtmasse 6, aufgebracht, vgl. Figur 8. Alternativ dazu können die Platten 1, 2 auch außen miteinander verschweißt werden (Figur 9).

## Patentansprüche

1. Lichtelement mit zwei transparenten Kunststoffplatten (1, 2), zwischen denen ein gewebeartiges Material (3) gelegt ist,
**dadurch gekennzeichnet,**
**dass** zwischen den Platten (1, 2), entlang deren Rändern Abstandshalter (4) angeordnet sind, deren Höhe gleich oder größer ist als die Dicke des gewebeartigen Materials (3), und dass das gewebeartige Material sich innerhalb der von den Abstandshaltern umrahmten Flächen befindet.

2. Lichtelement nach Anspruch 1,
**dadurch gekennzeichnet,**
**dass** die Abstandshalter (4) Streifen aus Kunststoff sind.

3. Lichtelement nach Anspruch 1 und 2,
**dadurch gekennzeichnet,**
**dass** zwischen den Rändern des gewebeartigen Materials (3) und den gegenüberliegenden Rändern der Abstandshalter ein Zwischenraum besteht.

4. Lichtelement nach einem der Ansprüche 1 bis 3,
**dadurch gekennzeichnet,**
**dass** es gewölbt oder sattelförmig/gerade verlegt ist.

5. Lichtelement nach einem der Ansprüche 1 bis 4,
**dadurch gekennzeichnet,**
**dass** das gewebeartige Material ein Vlies ist.

6. Lichtelement nach Anspruch 5
**dadurch gekennzeichnet,**
**dass** das Vlies aus Glas, aus Textil oder aus Kunststoff besteht.

## Claims

1. A light element having two transparent plastics panels (1, 2), placed between which there is a woven-fabric-type material (3),
**characterised in that**
arranged between the panels (1, 2), along their edges, there are spacers (4), whose height is equal to or greater than the thickness of the woven-fabric-type material (3), and **in that** the woven-fabric-type material is located within the areas framed by the spacers.

2. A light element according to claim 1,
**characterised in that**
the spacers (4) are strips made from plastics material.

3. A light element according to claim 1 and 2,
**characterised in that**
there is an interspace between the edges of the woven-fabric-type material (3) and the opposing edges of the spacers.

4. A light element according to one of claims 1 to 3,
**characterised in that**
it is arched or laid in the form of a saddle/a straight line.

5. A light element according to one of claims 1 to 4,
**characterised in that**
the woven-fabric-type material is a fleece.

6. A light element according to claim 5,
**characterised in that**
the fleece is made of glass, of textile or of plastics material.

## Revendications

1. Elément lumineux avec deux plaques de matériau synthétique transparentes (1, 2) entre lesquelles est placé un matériau en forme de tissu (3),
**caractérisé**
**en ce que** sont disposées entre les plaques (1, 2) le long des bords de celles-ci, des pièces d'écartement (4) dont la hauteur est égale ou plus grande que l'épaisseur du matériau en forme de tissu (3), et en ce que le matériau en forme de tissu se trouve à l'intérieur des faces encadrées par les pièces d'écartement.

2. Elément lumineux selon la revendication 1, **caractérisé en ce que** les pièces d'écartement (4) sont des bandes en matériau synthétique.

3. Elément lumineux selon la revendication 1 et 2, **caractérisé en ce qu'**il existe entre les bords du matériau en forme de tissu (3) et les bords opposés des pièces d'écartement un espace intermédiaire.

4. Elément lumineux selon l'une des revendications 1 à 3, **caractérisé en ce qu'**il est posé d'une manière bombée ou en forme de selle/rectiligne.

5. Elément lumineux selon l'une des revendications 1 à 4, **caractérisé en ce que** le matériau en forme de tissu est une nappe.

6. Elément lumineux selon la revendication 5, **caractérisé en ce que** la nappe est constituée de verre, de textile ou de matériau synthétique.
